(19) **Europäisches Patentamt / European Patent Office / Office européen des brevets**

(11) **EP 4 191 465 A1**

(12) # EUROPEAN PATENT APPLICATION

(43) Date of publication:
07.06.2023 Bulletin 2023/23

(21) Application number: 22207726.5

(22) Date of filing: 16.11.2022

(51) International Patent Classification (IPC):
*G06F 40/237* (2020.01)    *G06F 40/242* (2020.01)
*G06F 40/279* (2020.01)    *G06F 40/30* (2020.01)
*G06N 3/00* (2023.01)

(52) Cooperative Patent Classification (CPC):
**G06F 40/242; G06F 40/237; G06F 40/279;
G06F 40/30; G06N 3/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 03.12.2021 CN 202111470762

(71) Applicant: FUJITSU LIMITED
**Kawasaki-shi, Kanagawa 211-8588 (JP)**

(72) Inventors:
• **Zheng, Zhongguang
Beijing, 100027 (CN)**
• **Fang, Lu
Beijing, 100027 (CN)**
• **Cao, Yiling
Beijing, 100027 (CN)**
• **Sun, Jun
Beijing, 100027 (CN)**

(74) Representative: **Hoffmann Eitle
Patent- und Rechtsanwälte PartmbB
Arabellastraße 30
81925 München (DE)**

(54) **METHOD AND DEVICE OF GENERATING LANGUAGE MODEL AND NATURAL LANGUAGE PROCESSING METHOD**

(57)    The present disclosure relates to a method and device of generating an extended pre-trained language model and a natural language processing method. According to an embodiment of the present disclosure, the method of generating an extended pre-trained language model comprises training an extended pre-trained language model in an iterative manner. Training the extended pre-trained language model comprises: generating, based on a first mask for randomly hiding a word in a sample sentence containing an unregistered word, an encoding feature of the sample sentence; generating a predicted hidden word based on the encoding feature; and adjusting the extended pre-trained language model based on the predicted hidden word. The beneficial effects of the method and device of the present disclosure include at least one of: reducing training time, improving task accuracy, saving hardware resources, and facilitating use.

Figure 2

EP 4 191 465 A1

**Description**

**CROSS-REFERENCE TO RELATED APPLICATIONS**

This application claims the priority benefit of Chinese Patent Application No. 202111470762.4, filed on December 3, 2021 in the China National Intellectual Property Administration, the disclosure of which is incorporated herein in its entirety by reference.

**FIELD OF THE INVENTION**

The present disclosure relates generally to natural language processing, and more particularly, to a method of generating an extended pre-trained language model, a device for generating an extended pre-trained language model, and a natural language processing method.

**BACKGROUND OF THE INVENTION**

Natural Language Processing (NLP) is an important direction in the field of computer science and the field of artificial intelligence. It studies various theories and methods capable of realizing effective communication between humans and computers using natural languages.

With the popularization of neural networks, it is becoming more and more popular to perform natural language processing using neural network-based models. A pre-trained language model is a model obtained through training by a self-supervised learning method on large-scale unsupervised data. Pre-trained language models such as BERT (Bidirectional Encoder Representation from Transformers), RoBERT, DistilBERT and XLNet have strong feature learning capability, and can significantly improve the performance of downstream tasks. The pre-trained models that are currently relatively popular have the following characteristics: (1) Models are huge, containing many parameters. For example, one model of BERT may contain 110 million parameters; (2) Training time is long, requiring strong hardware support.

The above two characteristics determine that a high cost is required for generating pre-trained language models. It is difficult for ordinary researchers or research institutions to train their own models according to specific requirements alone. Therefore, people always acquire existing pre-trained language models through networks, and then use them directly for their own specific tasks. However, there are often differences in terms of fields between the existing pre-trained language models and the specific tasks. For example, pre-trained language model BERT-base-cased is obtained on texts in the general field, while it is now necessary to process texts in the field of organic chemistry. Although pre-trained language models generally will all improve the accuracy of downstream tasks, differences in terms of fields limit the roles of the pre-trained language models. If the problem of differences in fields can be overcome, pre-trained language models will further improve the accuracy of specific tasks. Therefore, it is desirable to generate pre-trained language models applicable to fields of interest at a lower cost.

**SUMMARY OF THE INVENTION**

A brief summary of the present disclosure is given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

According to an aspect of the present disclosure, there is provided a computer-implemented method of generating an extended pre-trained language model, comprising training an extended pre-trained language model in an iterative manner, wherein a model constructed based on a pre-trained language model is taken as the extended pre-trained language model in a first training iteration round, and training the extended pre-trained language model comprises: generating, based on a first mask for randomly hiding a word in a sample sentence containing an unregistered word, an encoding feature of the sample sentence; generating a predicted hidden word based on the encoding feature; and adjusting the extended pre-trained language model based on the predicted hidden word; wherein generating an encoding feature comprises: generating an identification sequence of the sample sentence according to fixed vocabulary of the pre-trained language model and unregistered vocabulary associated with a target domain and not overlapping with the fixed vocabulary; generating, based on the first mask, a registered identification sequence of the identification sequence that does not contain an identification of the unregistered word and an unregistered identification sequence that contains the identification of the unregistered word; generating an embedding vector of the registered identification sequence by a first embedding layer inherited from the pre-trained language model; generating an embedding vector of the unregistered identification sequence by a second embedding layer; and generating the encoding feature based on the embedding vector of the registered identification sequence and the embedding vector of the unregistered identification sequence.

According to an aspect of the present disclosure, there is provided a device for generating an extended pre-trained language model. The device comprises: a memory storing thereon instructions; and at least one processor configured to execute the instructions to realize: a training unit configured to train an extended pre-trained language model in an iterative manner, wherein a model constructed based on a pre-trained language model is taken as the extended pre-trained language model in a first training iteration round; wherein the training unit comprises: an encoding subunit configured to generate, based on a first mask for randomly hiding a word in a sample sentence containing an unregistered word, an encoding feature of the sample sentence; a predicting subunit configured to generate a predicted hidden word based on the encoding feature; and an adjusting subunit configured to adjust the extended pre-trained language model based on the predicted hidden word; wherein the encoding subunit comprises: an identification sequence generating unit configured to generate an identification sequence of the sample sentence according to fixed vocabulary of the pre-trained language model and unregistered vocabulary associated with a target domain and not overlapping with the fixed vocabulary; a hiding unit configured to generate, based on the first mask, a registered identification sequence of the identification sequence that does not contain an identification of the unregistered word and an unregistered identification sequence that contains the identification of the unregistered word; an embedding unit configured to: generate an embedding vector of the registered identification sequence by a first embedding layer inherited from the pre-trained language model; and generate an embedding vector of the unregistered identification sequence by a second embedding layer; and a generating unit configured to generate the encoding feature based on the embedding vector of the registered identification sequence and the embedding vector of the unregistered identification sequence.

According to an aspect of the present disclosure, there is provided a natural language processing method, characterized by comprising: processing, through an extended pre-trained language model generated by the aforementioned method of generating an extended pre-trained language model, a natural language sentence associated with a target domain to generate a prediction result.

According to an aspect of the present disclosure, there is provided a computer-readable storage medium storing thereon a program that, when executed, causes a computer to function as: a training unit for generating an extended pre-trained language model. The training unit is configured to train an extended pre-trained language model in an iterative manner, wherein a model constructed based on a pre-trained language model is taken as the extended pre-trained language model in a first training iteration round. The training unit comprises: an encoding subunit configured to generate, based on a first mask for randomly hiding a word in a sample sentence containing an unregistered word, an encoding feature of the sample sentence; a predicting subunit configured to generate a predicted hidden word based on the encoding feature; and an adjusting subunit configured to adjust the extended pre-trained language model based on the predicted hidden word. The encoding subunit comprises: an identification sequence generating unit configured to generate an identification sequence of the sample sentence according to fixed vocabulary of the pre-trained language model and unregistered vocabulary associated with a target domain and not overlapping with the fixed vocabulary; a hiding unit configured to generate, based on the first mask, a registered identification sequence of the identification sequence that does not contain an identification of the unregistered word and an unregistered identification sequence that contains the identification of the unregistered word; an embedding unit configured to: generate an embedding vector of the registered identification sequence by a first embedding layer inherited from the pre-trained language model; and generate an embedding vector of the unregistered identification sequence by a second embedding layer; and a generating unit configured to generate the encoding feature based on the embedding vector of the registered identification sequence and the embedding vector of the unregistered identification sequence.

The beneficial effects of the methods, device, and storage medium of the present disclosure include at least one of: reducing training time, improving task accuracy, saving hardware resources, and facilitating use.

## BRIEF DESCRIPTION OF THE DRAWINGS

Embodiments of the present disclosure will be described below with reference to the accompanying drawings, which will help to more easily understand the above and other objects, features and advantages of the present disclosure. The accompanying drawings are merely intended to illustrate the principles of the present disclosure. The sizes and relative positions of units are not necessarily drawn to scale in the accompanying drawings. The same reference numbers may denote the same features. In the accompanying drawings:

Figure 1 illustrates an exemplary flowchart of a method for training an extended pre-trained language model according to an embodiment of the present disclosure;

Figure 2 illustrates an exemplary flowchart of a method for generating an encoding feature according to an embodiment of the present disclosure;

Figure 3 illustrates a block diagram of a structure that implements a method of generating an extended pre-trained language model of the present disclosure, according to an embodiment of the present disclosure;

Figure 4 illustrates a block diagram of a structure of an extended pre-trained language model having been subjected to a merging operation according to an embodiment of the present disclosure;

Figure 5 illustrates a block diagram of a structure of an extended pre-trained language model according to a comparative example;

Figure 6 illustrates an exemplary block diagram of a device for generating an extended pre-trained language model according to an embodiment of the present disclosure;

Figure 7 illustrates an exemplary block diagram of a device for generating an extended pre-trained language model according to an embodiment of the present disclosure; and

Figure 8 illustrates an exemplary block diagram of an information processing apparatus according to an embodiment of the present disclosure.

**DETAILED DESCRIPTION OF THE INVENTION**

Hereinafter, exemplary embodiments of the present disclosure will be described combined with the accompanying drawings. For the sake of clarity and conciseness, the specification does not describe all features of actual embodiments. However, it should be understood that many decisions specific to the embodiments may be made in developing any such actual embodiment, so as to achieve specific objects of a developer, and these decisions may vary as embodiments are different.

It should also be noted herein that, to avoid the present disclosure from being obscured due to unnecessary details, only those device structures closely related to the solution according to the present disclosure are shown in the accompanying drawings, while other details not closely related to the present disclosure are omitted.

It should be understood that, the present disclosure will not be limited only to the described embodiments due to the following description with reference to the accompanying drawings. Herein, where feasible, embodiments may be combined with each other, features may be substituted or borrowed between different embodiments, and one or more features may be omitted in one embodiment.

Computer program code for performing operations of various aspects of embodiments of the present disclosure can be written in any combination of one or more programming languages, the programming languages including object-oriented programming languages, such as Java, Smalltalk, C++ and the like, and further including conventional procedural programming languages, such as "C" programming language or similar programming languages.

Methods of the present disclosure can be implemented by circuitry having corresponding functional configurations. The circuitry includes circuitry for a processor.

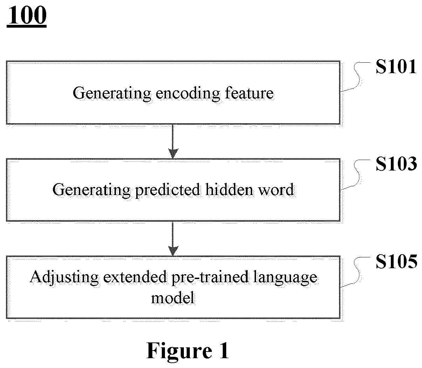

An aspect of the present disclosure provides a method of generating an extended pre-trained language model. The method can be implemented by a computer. An extended pre-trained language model B' is constructed based on a pre-trained language model B. The pre-trained language model B has its corresponding fixed vocabulary Vf, wherein the fixed vocabulary Vf contains a registered word for the model. The method of generating an extended pre-trained language model comprises training the extended pre-trained language model B' in an iterative manner, wherein a model constructed based on the pre-trained language model B is taken as the extended pre-trained language model B' in a first training iteration round. Specifically, it is possible to train the extended pre-trained language model B' in an iterative manner based on a loss function using a sample sentence. In an example training iteration round, training the extended pre-trained language model B' can include the flow as shown in Figure 1.

Figure 1 illustrates an exemplary flowchart of a method 100 for training an extended pre-trained language model according to an embodiment of the present disclosure.

In step S101, based on a first mask m1 for randomly hiding a word in a sample sentence Sen containing an unregistered word Wo, an encoding feature Fenc of the sample sentence is generated. The first mask m1 may be a vector indicating a position of a hidden word in the sentence Sen. Exemplarily, suppose that the sample sentence Sen="this is a banana", the unregistered word Wo="banana", the randomly hiding selects to hide a second word in the sentence Sen, the first mask m1=[0,1,0 ,0], and "1" indicates that the word "is" at the corresponding position in the sentence Sen is randomly selected for hiding. Although in the example the hidden word is selected as a registered word, it may also be selected as the unregistered word Wo in an unregistered vocabulary Vo.

In step S103, a predicted hidden word Wp is generated based on the encoding feature Fenc.

In step S105, the extended pre-trained language model B' is adjusted based on the predicted hidden word Wp.

For example, a loss function is determined according to whether the randomly hidden word is the same as the predicted hidden word Wp, or according to a degree of similarity therebetween, and parameters of the model B' are adjusted with a gradient descent method, so as to achieve the object of optimizing the model B'.

By iteratively performing the method 100, the object of optimizing the model B' is achieved, wherein a subsequent iteration round is trained by taking a model determined in a previous iteration round as a basis. Conditions for termination of training are, for example: the training reaches a predetermined number of times, the loss function has converged, or the loss function is small enough, etc.

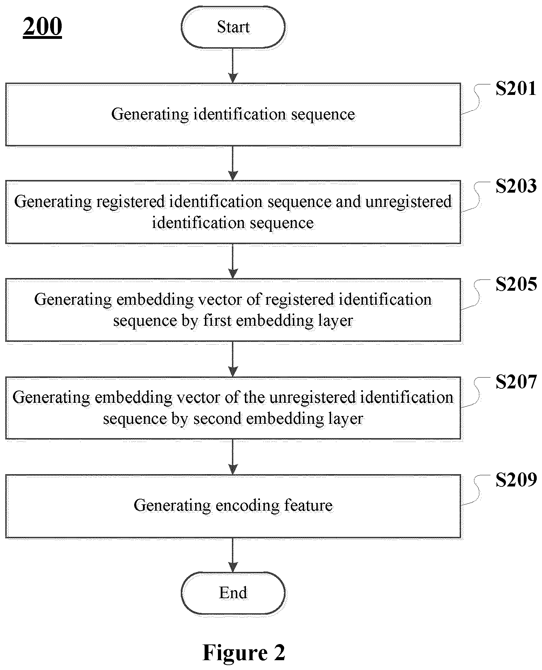

Generating an encoding feature is further described below with reference to Figure 2.

Figure 2 illustrates an exemplary flowchart of a method 200 for generating an encoding feature according to an embodiment of the present disclosure.

In step S201, an identification sequence S id of the sample sentence is generated according to fixed vocabulary Vf of the pre-trained language model B and unregistered vocabulary Vo associated with a target domain and not overlapping with the fixed vocabulary Vf. An exemplary fixed vocabulary Vf is as follows.

Vf=["I" :1, "like" :2, " [MASK]" :3, "ba" :4, "##na" : 5, "this" :6, "is" :7, "a" :8]

For the entry "I": 1 in the vocabulary, "I" denotes a word, and "1" denotes an identification (id) of the word. The identification "3" indicates a hidden word. The word prefixed with "##" denotes that this word is a sub-word, which is used to process an unregistered word. For example, banana is an unregistered word, then it can be segmented into three sub-words (i.e., ba_##na_##na) according to the vocabulary, and the unregistered word can be processed by such a processing model. However, it still will be better to process "banana" as a whole. Based on the vocabulary, the identification sequence S_id=[6,7,8,9] of the sample sentence Sen= "this is a banana" can be obtained.

Various methods can be used to determine the unregistered vocabulary Vo for the target domain. For example, words are extracted on a corpus D of the target domain by a BPE (Byte Pair Encoding) algorithm or a WordPiece algorithm to obtain vocabulary Vo', and then the unregistered vocabulary Vo is constructed according to the fixed vocabulary Vf and the vocabulary Vo', such that words in Vo appear in the vocabulary Vo' but not in Vf Suppose that there is only the sample sentence Sen on the corpus D, then Vo=["banana":9].

In step S203, a registered identification sequence S_in of the identification sequence S id that does not contain an identification of the unregistered word and an unregistered identification sequence S oov that contains the identification of the unregistered word are generated based on the first mask m1. Exemplarily, determination manners of the sequences S in and S ooV are as shown in the following equations.

$$S\_in=(1-m1)*S\_id \qquad (1)$$

$$S\_oov=m1*S\_id \qquad (2)$$

where "*" denotes inner product. On this basis, for the sample sentence Sen= "this is a banana", the sequence S_in=[6,3,8,0], and the sequence S_oov=[0,0,0,9].

In step S205, an embedding vector emb_in of the registered identification sequence S in is generated by a first embedding layer Lem 1 inherited from the pre-trained language model. For example, for the sequence S_in=[6,3,8,0], its embedding vector can be represented as:

$$emb\_in=[e_6,e_3,e_8,e_0],$$

where $e_i$ denotes a vector corresponding to the identification "i". The first embedding layer Lem1 converts an id sequence of an input sentence of n words into an n*e-dimensional vector, where e is a vector dimension corresponding to each id. The embedding layer is a regular constituent unit of a natural language processing model, and will no longer be repeatedly described herein.

In step S207, an embedding vector emb_oov of the unregistered identification sequence S_oov is generated by a second embedding layer Lem2. For example, for the sequence S_oov=[0,0,0,9], its embedding vector can be represented as:

$$emb\_in=[e_0',e_0',e_0',e_9'].$$

In step S209, the encoding feature Fenc is generated based on the embedding vector emb in of the registered identification sequence and the embedding vector emb_oov of the unregistered identification sequence. In an example, an embedding vector emb_fin of the identification sequence is generated by merging the embedding vector emb in of the registered identification sequence and the embedding vector emb_oov of the unregistered identification sequence; and the encoding feature Fenc is generated by an encoding layer based on the embedding vector emb_fin of the identification sequence. The encoding layer is configured to convert an n*e-dimensional embedding vector into an n*d-dimensional vector through multiple network structures, where d is an encoding dimension. The aforementioned "merging" operation can be implemented based on the second mask m2. Considering that the dimension (e.g., 4*100) of the embedding vectors emb_in and emb_oov is somewhat enlarged with respect to the identification sequence (e.g., 1*4), the second mask m2 can be obtained by extending the first mask m1, such that the dimension of the second mask m2 is the same as the dimension of the embedding vectors emb in and emb_oov. The embedding vector emb_fin can be determined by the following equation.

$$\text{emb\_fin} = (1-m2)*\text{emb\_in} + m2*\text{emb\_oov} \qquad (3)$$

In an embodiment, it is possible to take an extended pre-trained language model after being trained in an alternative manner as the generated extended pre-trained language model. Accordingly, it is possible to generate a prediction result by processing a natural language sentence associated with a target domain using the generated extended pre-trained language model.

In an embodiment, it is possible to standardize an extended pre-trained language model after completing iterative training into a standard natural language processing model including a single embedding layer, and to take the standard natural language processing model as the generated extended pre-trained language model. Standardizing an adjusted extended pre-trained language model into a standard natural language processing model including a single embedding layer can comprise: merging the first embedding layer and the second embedding layer into the single embedding layer. For example, a processing matrix of the single embedding layer is obtained by splicing a processing matrix of the first embedding layer and a processing matrix of the second embedding layer. After the merging, the model is converted from a non-standard format to a standard format. As such, downstream tasks can directly call the extended pre-trained model. If not being converted, the model is a non-standard network structure, and then the downstream tasks need to first call a model structure code base in order to load and use the extended pre-trained model, which is not conducive to the application of the model and the protection of code, and the convenience of the model is damaged.

In an embodiment, during training the extended pre-trained language model in the iterative manner, an adjustment amplitude of the first embedding layer is set to be significantly less than that of the second embedding layer. For example, a ratio of the adjustment amplitude of the first embedding layer to the adjustment amplitude of the second embedding layer is less than 0.500, less than 0.250, or less than 0.2, even less than 0.125.

In the present disclosure, two embedding layers are required to be used in generating an extended pre-trained language model. The benefits of using two embedding layers are described below. At the time of training a model, a weight parameter in each network is required to be initialized, and then training is performed according to a learning rate (i.e., adjustment magnitude) so as to adjust a weight. A weight of a first embedding layer is more accurate because it is directly inherited from a pre-trained language model, while a weight of a second embedding layer corresponds to an unregistered word and needs training from scratch. Therefore, the first embedding layer that inherits a weight from the pre-trained language model only requires a smaller learning rate of, for example, 0.00001 for adjustment, while the second embedding layer that is trained from scratch requires a larger learning rate of, for example, 0.0001. If only one embedding layer is used, it is impossible to take the adjustment of the parameters of both the parts into account. Therefore, the division into two embedding layers can train weight parameters of networks more effectively and improve training efficiency.

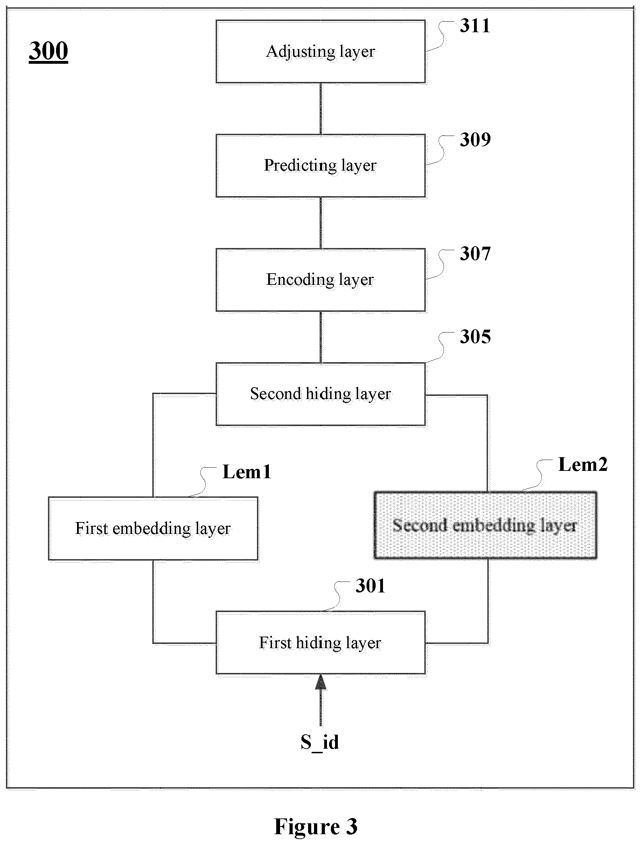

For implementing a method of generating an extended pre-trained language model of the present disclosure, multiple layer structures can be included. Description is made below with reference to Figure 3.

Figure 3 illustrates a block diagram of a structure 300 that implements a method of generating an extended pre-trained language model of the present disclosure, according to an embodiment of the present disclosure.

The structure 300 comprises: a first hiding layer 301, a first embedding layer Lem1, a second embedding layer Lem2, a second hiding layer 305, an encoding layer 307, a predicting layer 309, and an adjusting layer 311. The first hiding layer 301 is configured to generate, based on the identification sequence S id, a registered identification sequence S in that does not contain an identification of the unregistered word and an unregistered identification sequence S_oov that contains the identification of the unregistered word. The first embedding layer Lem1 is configured to generate an embedding vector emb_in of the registered identification sequence, wherein the first embedding layer Lem1 is determined by inheriting an embedding layer of the pre-trained language model. The second embedding layer Lem2 is configured to generate an embedding vector emb_oov of the unregistered identification sequence. The second hiding layer 305 is configured to generate an embedding vector emb_fin of the identification sequence by merging the embedding vector emb in of the registered identification sequence and the embedding vector emb_oov of the unregistered identification sequence. The encoding layer 307 is configured to generate the encoding feature Fenc based on the embedding vector emb in of the registered identification sequence and the embedding vector emb_oov of the unregistered identification sequence. The predicting layer 309 is configured to generate a predicted hidden word Wp based on the encoding feature Fenc. The adjusting layer 311 is configured to adjust the extended pre-trained language model based on the predicted hidden word Wp.

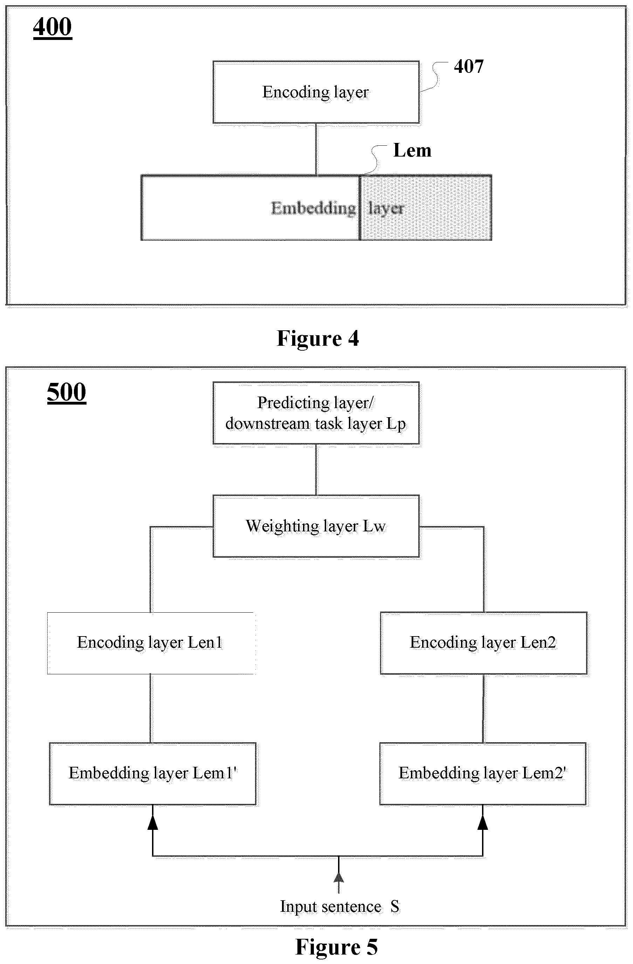

An exemplary structure of an extended pre-trained language model having been subjected to a merging operation is as shown in Figure 4. Figure 4 illustrates an exemplary block diagram of a structure 400 of an extended pre-trained language model having been subjected to a merging operation according to an embodiment of the present disclosure. The structure 400 comprises a single embedding layer Lem and a single encoding layer 407, wherein the embedding layer Lem is obtained by merging the first embedding layer Lem1 and the second embedding layer Lem2 into a single embedding layer. For example, it is possible to merge a 8*100 processing matrix of the first embedding layer Lem1 and a 1*100 processing matrix of the second embedding layer Lem2 into a 9*100 matrix as a processing matrix of the embedding layer Lem. The encoding layer 407 is used for generating an encoding feature based on an embedding vector of an identification sequence. The encoding layer 407 can connect a downstream task layer to carry out predetermined natural language processing tasks. Such a model structure is a standard format, which is convenient for direct use by users.

In an embodiment, the pre-trained language model is a BERT pre-trained language model. The BERT model can be simply divided into three parts: an embedding layer, an encoding layer, and a task layer. The embedding layer is used for converting an id sequence of n inputted words into an n*e-dimensional embedding vector. The encoding layer is used for converting the n*e-dimensional embedding vector into an n*d-dimensional encoding vector through multiple network structures, where d is an encoding dimension. The task layer converts the encoding vector into a final output according to a specific task. For example, the task may be masked language model prediction. That is: a certain word in an input sentence is randomly replaced with a fixed mark "[MASK]", and then it is predicted which word the replaced word is specifically.

Characteristics of the solution of the present disclosure are described below with reference to Figure 5.

Figure 5 illustrates a block diagram of a structure 500 of an extended pre-trained language model according to a comparative example, wherein the pre-trained language model is an exBERT model. The structure 500 comprises an embedding layer Lem1', an embedding layer Lem2', an encoding layer Len1, an encoding layer Len2, a weighting layer Lw, and a predicting layer/downstream task layer Lp. The embedding layer Lem1' and the encoding layer Len1 process a registered identification sequence of the input sentence S. The embedding layer Lem2' and the encoding layer Len2 process an unregistered identification sequence of the input sentence S. The weighting layer Lw weights output features of the two encoding layers. The weighted features are provided to the predicting layer/downstream task layer Lp. The problem lies in that, the pre-trained language model already contains a lot of parameters, for example, the BERT pre-trained language model contains 110 million parameters, and the addition of Len2 and Lw makes the model become huger, thus requiring more hardware resources and time for training; moreover, the model is still a non-standard structure after completing training, which affects the convenience of use of the model.

Table 1 lists performance comparison of the method of the present disclosure with the conventional exBERT method. The method of the present disclosure as used herein includes standardizing a model, wherein "2080 Ti" is a graphics card type. As can be seen, the model proposed in the present disclosure is smaller, with less training time, with higher downstream task accuracy, saving more hardware resources, and meanwhile since the model is a standardized model, it does not require releasing model code, thus having excellent flexibility and convenience.

Table 1 Effect Comparison of the Solution of the Present Disclosure with the exBERT Solution

|  | exBERT | Method of the present disclosure |
|---|---|---|
| Parameter quantity | 147M | 122M (17%↓) |
| Training time | 233 min | 138 min (41%↓) |
| Testing time | 124 min | 57 min (55%↓) |
| Accuracy (%) | 92.7 | 92.9 |
| GPU usage (2080 Ti) | 2 | 1 |
| Flexibility | No | Yes |

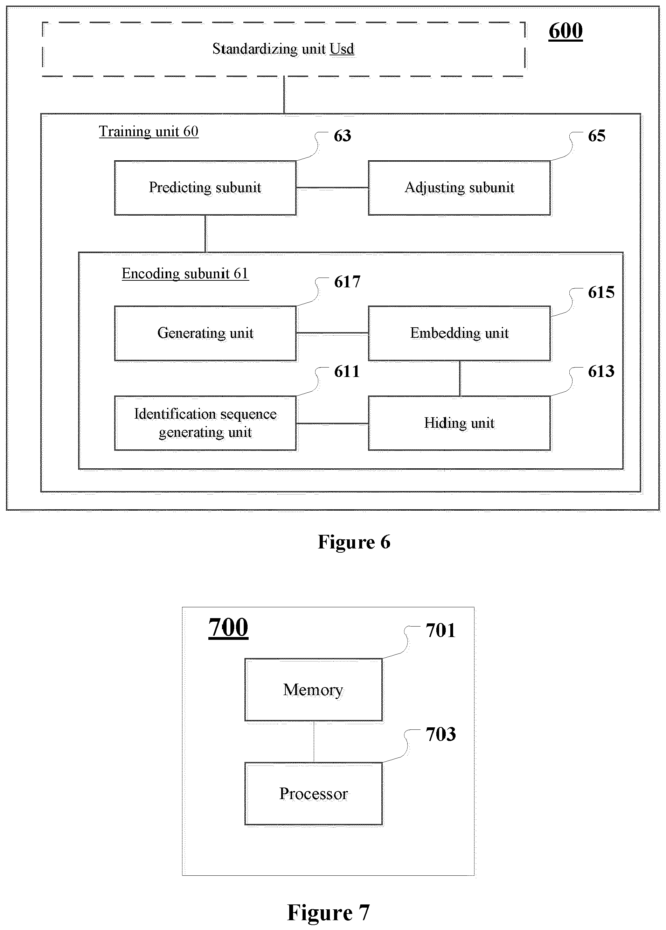

The present disclosure further provides a device for generating an extended pre-trained language model. Exemplary description is made below with reference to Figure 6. Figure 6 illustrates an exemplary block diagram of a device 600 for generating an extended pre-trained language model according to an embodiment of the present disclosure.

The device 600 comprises: a training unit 60 configured to train an extended pre-trained language model in an iterative manner, wherein a model constructed based on a pre-trained language model is taken as the extended pre-trained language model in a first training iteration round. The training unit 60 comprises: an encoding subunit 61, a predicting subunit 63, and an adjusting subunit 65. The encoding subunit 61 is configured to generate, based on a first mask for randomly hiding a word in a sample sentence containing an unregistered word, an encoding feature of the sample sentence. The predicting subunit 63 is configured to generate a predicted hidden word based on the encoding feature. The adjusting subunit 65 is configured to adjust the extended pre-trained language model based on the predicted hidden word. The encoding subunit 61 comprises: an identification sequence generating unit 611, a hiding unit 613, an embedding unit 615, and a generating unit 617. The identification sequence generating unit 611 is configured to generate an identification sequence of the sample sentence according to fixed vocabulary of the pre-trained language model and unregistered vocabulary associated with a target domain and not overlapping with the fixed vocabulary. The hiding unit 613 is configured to generate, based on the first mask, a registered identification sequence of the identification sequence that does not contain an identification of the unregistered word and an unregistered identification sequence that contains the identification of the unregistered word. The embedding unit 615 is configured to: generate an embedding vector of the registered identification sequence by a first embedding layer inherited from the pre-trained language model; and generate an embedding vector of the unregistered identification sequence by a second embedding layer. The generating unit 617 is configured to generate the encoding feature based on the embedding vector of the registered identification sequence and the embedding vector of the unregistered identification sequence. The device 600 has a corresponding relationship with the method 100. For a further configuration situation of the device 600, reference may be made to the description with regard to the method 100 in the present disclosure. For example, optionally, the device 600 may further comprise a standardizing unit Usd. The standardizing unit Usd is configured to standardize an extended pre-trained language model after completing iterative training into a standard natural language processing model including a single embedding layer, and to set the standard natural language processing model as the generated extended pre-trained language model; wherein standardizing an adjusted extended pre-trained language model into a standard natural language processing model including a single embedding layer comprises: merging the first embedding layer and the second embedding layer into the single embedding layer.

The present disclosure further provides a device for generating an extended pre-trained language model. Exemplary description is made below with reference to Figure 7. Figure 7 illustrates an exemplary block diagram of a device 700 for generating an extended pre-trained language model according to an embodiment of the present disclosure. The device 700 comprises: a memory 701 storing thereon instructions; and at least one processor 703 for executing the instructions to realize: a training unit configured to train an extended pre-trained language model in an iterative manner, wherein a model constructed based on a pre-trained language model is taken as the extended pre-trained language model in a first training iteration round. The training unit comprises: an encoding subunit configured to generate, based on a first mask for randomly hiding a word in a sample sentence containing an unregistered word, an encoding feature of the sample sentence; a predicting subunit configured to generate a predicted hidden word based on the encoding feature; and an adjusting subunit configured to adjust the extended pre-trained language model based on the predicted hidden word. The encoding subunit comprises: an identification sequence generating unit configured to generate an identification sequence of the sample sentence according to fixed vocabulary of the pre-trained language model and unregistered vocabulary associated with a target domain and not overlapping with the fixed vocabulary; a hiding unit configured to generate, based on the first mask, a registered identification sequence of the identification sequence that does not contain an identification of the unregistered word and an unregistered identification sequence that contains the identification of the unregistered word; an embedding unit configured to: generate an embedding vector of the registered identification sequence by a first embedding layer inherited from the pre-trained language model; and generate an embedding vector of the unregistered identification sequence by a second embedding layer; and a generating unit configured to generate the encoding feature based on the embedding vector of the registered identification sequence and the embedding vector of the unregistered identification sequence. The device 700 has a corresponding relationship with the method 100. For a further configuration situation of the device 700, reference may be made to the description with regard to the method 100 in the present disclosure.

An aspect of the present disclosure provides a computer-readable storage medium storing thereon a program that, when executed, causes a computer to function as: a training unit for generating an extended pre-trained language model. The training unit is configured to train an extended pre-trained language model in an iterative manner, wherein a model constructed based on a pre-trained language model is taken as the extended pre-trained language model in a first training iteration round. The training unit comprises: an encoding subunit configured to generate, based on a first mask for randomly hiding a word in a sample sentence containing an unregistered word, an encoding feature of the sample sentence; a predicting subunit configured to generate a predicted hidden word based on the encoding feature; and an adjusting subunit configured to adjust the extended pre-trained language model based on the predicted hidden word. The encoding subunit comprises: an identification sequence generating unit configured to generate an identification sequence of the sample sentence according to fixed vocabulary of the pre-trained language model and unregistered vocabulary associated with a target domain and not overlapping with the fixed vocabulary; a hiding unit configured to generate, based on the first mask, a registered identification sequence of the identification sequence that does not contain an identification of the unregistered word and an unregistered identification sequence that contains the identification of the unregistered word; an embedding unit configured to: generate an embedding vector of the registered identification sequence by a first embedding layer inherited from the pre-trained language model; and generate an embedding vector of the unregistered identification sequence by a second embedding layer; and a generating unit configured to generate the encoding feature based on the embedding vector of the registered identification sequence and the embedding vector of the unregistered identification sequence.

The present disclosure further provides a natural language processing method. The method comprises: processing, through an extended pre-trained language model generated by the method of generating an extended pre-trained language model of the present disclosure, a natural language sentence associated with a target domain to generate a prediction result.

An aspect of the present disclosure provides a non-transitory computer-readable storage medium storing thereon a program that, when executed, causes a computer to implement the function of: processing, through an extended pre-trained language model generated by the method of generating an extended pre-trained language model of the present disclosure, a natural language sentence associated with a target domain to generate a prediction result.

According to an aspect of the present disclosure, there is further provided an information processing apparatus.

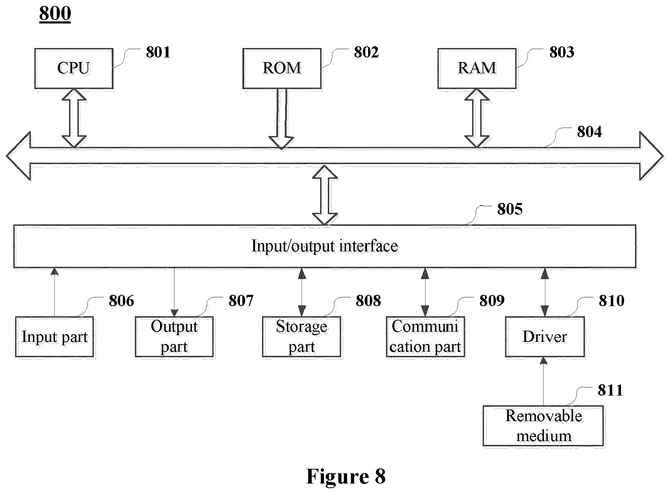

Figure 8 illustrates an exemplary block diagram of an information processing apparatus 800 according to an embodiment of the present disclosure. In Figure 8, a Central Processing Unit (CPU) 801 executes various processing according to programs stored in a Read-Only Memory (ROM) 802 or programs loaded from a storage part 808 to a Random Access Memory (RAM) 803. In the RAM 803, data needed when the CPU 801 executes various processing and the like is also stored as needed.

The CPU 801, the ROM 802 and the RAM 803 are connected to each other via a bus 804. An input/output interface 805 is also connected to the bus 804.

The following components are connected to the input/output interface 805: an input part 806, including a soft keyboard and the like; an output part 807, including a display such as a Liquid Crystal Display (LCD) and the like, as well as a speaker and the like; the storage part 808 such as a hard disc and the like; and a communication part 809, including a network interface card such as an LAN card, a modem and the like. The communication part 809 executes communication processing via a network such as the Internet, a local area network, a mobile network or a combination thereof.

A driver 810 is also connected to the input/output interface 805 as needed. A removable medium 811 such as a semiconductor memory and the like is installed on the driver 810 as needed, such that programs read therefrom are installed in the storage part 808 as needed.

The CPU 801 can run a program corresponding to a method of generating an extended pre-trained language model or a natural language processing method.

The beneficial effects of the methods, devices, and storage medium of the present disclosure include at least one of: reducing training time, improving task accuracy, saving hardware resources, and facilitating use.

As described above, according to the present disclosure, there are provided principles for generating an extended pre-trained language model and processing a natural language with the model. It should be noted that, the effects of the solution of the present disclosure are not necessarily limited to the above-mentioned effects, and in addition to or instead of the effects described in the preceding paragraphs, any of the effects as shown in the specification or other effects that can be understood from the specification can be obtained.

Although the present invention has been disclosed above through the description with regard to specific embodiments of the present invention, it should be understood that those skilled in the art can design various modifications (including, where feasible, combinations or substitutions of features between various embodiments), improvements, or equivalents to the present invention within the spirit and scope of the appended claims. These modifications, improvements or equivalents should also be considered to be included within the protection scope of the present invention.

It should be emphasized that, the term "comprise/include" as used herein refers to the presence of features, elements, steps or assemblies, but does not exclude the presence or addition of one or more other features, elements, steps or assemblies.

In addition, the methods of the various embodiments of the present invention are not limited to be executed in the time order as described in the specification or as shown in the accompanying drawings, and may also be executed in other time orders, in parallel or independently. Therefore, the execution order of the methods as described in the specification fails to constitute a limitation to the technical scope of the present invention.

Appendix

The present disclosure includes but is not limited to the following solutions.

1. A computer-implemented method of generating an extended pre-trained language model, comprising training an extended pre-trained language model in an iterative manner, wherein a model constructed based on a pre-trained language model is taken as the extended pre-trained language model in a first training iteration round, and training the extended pre-trained language model comprises:

generating, based on a first mask for randomly hiding a word in a sample sentence containing an unregistered word, an encoding feature of the sample sentence;
generating a predicted hidden word based on the encoding feature; and
adjusting the extended pre-trained language model based on the predicted hidden word;
wherein generating an encoding feature comprises:

generating an identification sequence of the sample sentence according to fixed vocabulary of the pre-trained language model and unregistered vocabulary associated with a target domain and not overlapping with the fixed vocabulary;
generating, based on the first mask, a registered identification sequence of the identification sequence that does not contain an identification of the unregistered word and an unregistered identification sequence that contains the identification of the unregistered word;
generating an embedding vector of the registered identification sequence by a first embedding layer inherited from the pre-trained language model;
generating an embedding vector of the unregistered identification sequence by a second embedding layer; and
generating the encoding feature based on the embedding vector of the registered identification sequence and the embedding vector of the unregistered identification sequence.

2. The method according to Appendix 1, wherein generating the encoding feature based on the embedding vector of the registered identification sequence and the embedding vector of the unregistered identification sequence comprises:

generating an embedding vector of the identification sequence by merging the embedding vector of the registered identification sequence and the embedding vector of the unregistered identification sequence; and
generating the encoding feature by an encoding layer based on the embedding vector of the identification sequence.

3. The method according to Appendix 1, characterized in that the method further comprises: standardizing an extended pre-trained language model after completing iterative training into a standard natural language processing model including a single embedding layer, and taking the standard natural language processing model as the generated extended pre-trained language model;
wherein standardizing an adjusted extended pre-trained language model into a standard natural language processing model including a single embedding layer comprises: merging the first embedding layer and the second embedding layer into the single embedding layer.

4. The method according to Appendix 1, wherein an extended pre-trained language model after being trained in the iterative manner is taken as the generated extended pre-trained language model.

5. The method according to Appendix 1, wherein during training the extended pre-trained language model in the iterative manner, an adjustment amplitude of the first embedding layer is set to be significantly less than that of the second embedding layer.

6. The method according to Appendix 3, wherein a processing matrix of the single embedding layer is obtained by splicing a processing matrix of the first embedding layer and a processing matrix of the second embedding layer.

7. The method according to Appendix 1, wherein the pre-trained language model is a BERT pre-trained language model.

8. The method according to Appendix 2, wherein generating an embedding vector of the identification sequence by merging the embedding vector of the registered identification sequence and the embedding vector of the unregistered identification sequence comprises:

obtaining a second mask by extending the first mask; and

generating an embedding vector of the identification sequence based on the second mask by merging the embedding vector of the registered identification sequence and the embedding vector of the unregistered identification sequence.

9. The method according to Appendix 3, wherein the standard natural language processing model includes a single encoding layer.

10. The method according to Appendix 5, wherein during training the extended pre-trained language model in the iterative manner, the adjustment amplitude of the first embedding layer and the adjustment amplitude of the second embedding layer are set such that a ratio of the adjustment amplitude of the first embedding layer to the adjustment amplitude of the second embedding layer is less than 0.2.

11. A device for generating an extended pre-trained language model, characterized by comprising:

a memory storing thereon instructions; and

at least one processor configured to execute the instructions to realize:
a training unit configured to train an extended pre-trained language model in an iterative manner, wherein a model constructed based on a pre-trained language model is taken as the extended pre-trained language model in a first training iteration round;

wherein the training unit comprises:

an encoding subunit configured to generate, based on a first mask for randomly hiding a word in a sample sentence containing an unregistered word, an encoding feature of the sample sentence;

a predicting subunit configured to generate a predicted hidden word based on the encoding feature; and

an adjusting subunit configured to adjust the extended pre-trained language model based on the predicted hidden word;

wherein the encoding subunit comprises:

an identification sequence generating unit configured to generate an identification sequence of the sample sentence according to fixed vocabulary of the pre-trained language model and unregistered vocabulary associated with a target domain and not overlapping with the fixed vocabulary;

a hiding unit configured to generate, based on the first mask, a registered identification sequence of the identification sequence that does not contain an identification of the unregistered word and an unregistered identification sequence that contains the identification of the unregistered word;

an embedding unit configured to: generate an embedding vector of the registered identification sequence by a first embedding layer inherited from the pre-trained language model; and generate an embedding vector of the unregistered identification sequence by a second embedding layer; and

a generating unit configured to generate the encoding feature based on the embedding vector of the registered identification sequence and the embedding vector of the unregistered identification sequence.

12. The device according to Appendix 11, wherein the generating unit is configured to generate an embedding vector of the identification sequence by merging the embedding vector of the registered identification sequence and the embedding vector of the unregistered identification sequence; and to generate the encoding feature using an encoding layer based on the embedding vector of the identification sequence.

13. The device according to Appendix 11, characterized in that the device further comprises a standardizing unit configured to standardize an extended pre-trained language model after completing iterative training into a standard natural language processing model including a single embedding layer, and to set the standard natural language processing model as the generated extended pre-trained language model;
wherein standardizing an adjusted extended pre-trained language model into a standard natural language processing model including a single embedding layer comprises: merging the first embedding layer and the second embedding layer into the single embedding layer.

14. The device according to Appendix 11, wherein the at least one processor is further configured to execute the instructions to realize: setting an extended pre-trained language model after being trained in the iterative manner, as the generated extended pre-trained language model.

15. The device according to Appendix 11, wherein the training unit is configured to: during training the extended pre-trained language model in the iterative manner, set an adjustment amplitude of the first embedding layer to be significantly less than that of the second embedding layer.

16. The device according to Appendix 13, wherein a processing matrix of the single embedding layer is obtained by splicing a processing matrix of the first embedding layer and a processing matrix of the second embedding layer.

17. The device according to Appendix 11, wherein the pre-trained language model is a BERT pre-trained language model.

18. The device according to Appendix 12, wherein the generating unit is configured to: obtain a second mask by extending the first mask; and generate an embedding vector of the identification sequence based on the second mask by merging the embedding vector of the registered identification sequence and the embedding vector of the unregistered identification sequence.

19. The device according to Appendix 13, wherein the standard natural language processing model includes a single encoding layer.

20. A natural language processing method, characterized by comprising:
processing, through an extended pre-trained language model generated by the method according to one of Annexes 1 to 10, a natural language sentence associated with the target domain to generate a prediction result.

**Claims**

1. A computer-implemented method of generating an extended pre-trained language model, comprising training an extended pre-trained language model in an iterative manner, wherein a model constructed based on a pre-trained language model is taken as the extended pre-trained language model in a first training iteration round, and training the extended pre-trained language model comprises:

Generating (SI01), based on a first mask for randomly hiding a word in a sample sentence containing an unregistered word, an encoding feature of the sample sentence;
generating (S103) a predicted hidden word based on the encoding feature; and
adjusting (SI05) the extended pre-trained language model based on the predicted hidden word;
wherein generating an encoding feature comprises:

generating (S201) an identification sequence (S id) of the sample sentence according to fixed vocabulary of the pre-trained language model and unregistered vocabulary associated with a target domain and not overlapping with the fixed vocabulary;
generating (S203), based on the first mask, a registered identification sequence of the identification sequence that does not contain an identification of the unregistered word and an unregistered identification sequence that contains the identification of the unregistered word;
generating (S205) an embedding vector of the registered identification sequence by a first embedding layer (Lem1) inherited from the pre-trained language model;
generating (S207) an embedding vector of the unregistered identification sequence by a second embedding layer (Lem2); and
generating (S209) the encoding feature based on the embedding vector of the registered identification sequence and the embedding vector of the unregistered identification sequence.

**2.** The method according to claim 1, wherein generating (S201) the encoding feature based on the embedding vector of the registered identification sequence and the embedding vector of the unregistered identification sequence comprises:

generating an embedding vector of the identification sequence by merging the embedding vector of the registered identification sequence and the embedding vector of the unregistered identification sequence; and
generating the encoding feature by an encoding layer (407) based on the embedding vector of the identification sequence.

**3.** The method according to claim 1, **characterized in that** the method further comprises: standardizing an extended pre-trained language model after completing iterative training into a standard natural language processing model including a single embedding layer (Lem), and taking the standard natural language processing model as the generated extended pre-trained language model;
wherein standardizing an adjusted extended pre-trained language model into a standard natural language processing model including a single embedding layer comprises: merging the first embedding layer (Lem1) and the second embedding layer (Lem2) into the single embedding layer (Lem).

**4.** The method according to claim 1, wherein an extended pre-trained language model after being trained in the iterative manner is taken as the generated extended pre-trained language model.

**5.** The method according to claim 1, wherein during training the extended pre-trained language model in the iterative manner, an adjustment amplitude of the first embedding layer (Lem1) is set to be significantly less than that of the second embedding layer (Lem2).

**6.** The method according to claim 3, wherein a processing matrix of the single embedding layer (Lem) is obtained by splicing a processing matrix of the first embedding layer (Lem1) and a processing matrix of the second embedding layer (Lem2).

**7.** The method according to claim 1, wherein the pre-trained language model is a BERT pre-trained language model.

**8.** The method according to claim 2, wherein generating an embedding vector of the identification sequence by merging the embedding vector of the registered identification sequence and the embedding vector of the unregistered identification sequence comprises:

obtaining a second mask by extending the first mask; and
generating an embedding vector of the identification sequence based on the second mask by merging the embedding vector of the registered identification sequence and the embedding vector of the unregistered identification sequence.

**9.** A device (700) for generating an extended pre-trained language model, **characterized by** comprising:

a memory (701) storing thereon instructions; and
at least one processor (703) configured to execute the instructions to realize:
a training unit (60) configured to train an extended pre-trained language model in an iterative manner, wherein a model constructed based on a pre-trained language model is taken as the extended pre-trained language model in a first training iteration round;
wherein the training unit comprises:

an encoding subunit (61) configured to generate, based on a first mask for randomly hiding a word in a sample sentence containing an unregistered word, an encoding feature of the sample sentence;
a predicting subunit (63) configured to generate a predicted hidden word based on the encoding feature; and
an adjusting subunit (65) configured to adjust the extended pre-trained language model based on the predicted hidden word;

wherein the encoding subunit comprises:

an identification sequence generating unit (611) configured to generate an identification sequence of the sample sentence according to fixed vocabulary of the pre-trained language model and unregistered vocabulary associated with a target domain and not overlapping with the fixed vocabulary;

a hiding unit (613)configured to generate, based on the first mask, a registered identification sequence of the identification sequence that does not contain an identification of the unregistered word and an unregistered identification sequence that contains the identification of the unregistered word;

an embedding unit (615) configured to: generate an embedding vector of the registered identification sequence by a first embedding layer inherited from the pre-trained language model; and generate an embedding vector of the unregistered identification sequence by a second embedding layer; and

a generating unit (617) configured to generate the encoding feature based on the embedding vector of the registered identification sequence and the embedding vector of the unregistered identification sequence.

10. A natural language processing method, **characterized by** comprising:

processing, through an extended pre-trained language model generated by the method according to one of claims 1 to 8, a natural language sentence associated with the target domain to generate a prediction result.

100

| Generating encoding feature | S101 |

| Generating predicted hidden word | S103 |

| Adjusting extended pre-trained language model | S105 |

**Figure 1**

**200**

```
          ┌──────────┐
          │  Start   │
          └────┬─────┘
               │
               ▼
┌───────────────────────────────────────────────┐      S201
│        Generating identification sequence      │
└───────────────────────┬───────────────────────┘
                        │
                        ▼
┌───────────────────────────────────────────────┐      S203
│ Generating registered identification sequence  │
│   and unregistered identification sequence     │
└───────────────────────┬───────────────────────┘
                        │
                        ▼
┌───────────────────────────────────────────────┐      S205
│  Generating embedding vector of registered     │
│ identification sequence by first embedding layer│
└───────────────────────┬───────────────────────┘
                        │
                        ▼
┌───────────────────────────────────────────────┐      S207
│ Generating embedding vector of the unregistered│
│ identification sequence by second embedding layer│
└───────────────────────┬───────────────────────┘
                        │
                        ▼
┌───────────────────────────────────────────────┐      S209
│           Generating encoding feature          │
└───────────────────────┬───────────────────────┘
                        │
                        ▼
              ┌──────────┐
              │   End    │
              └──────────┘
```

**Figure 2**

**300**

| 311 |
| --- |
| Adjusting layer |

| 309 |
| --- |
| Predicting layer |

| 307 |
| --- |
| Encoding layer |

| 305 |
| --- |
| Second hiding layer |

**Lem1**

| First embedding layer |
| --- |

**Lem2**

| Second embedding layer |
| --- |

| 301 |
| --- |
| First hiding layer |

S_id

**Figure 3**

**400**

Encoding layer  ⌐ **407**

⌐ **Lem**

Embedding layer

## Figure 4

**500**

Predicting layer/
downstream task layer Lp

Weighting layer Lw

Encoding layer Len1

Encoding layer Len2

Embedding layer Lem1'

Embedding layer Lem2'

Input sentence S

## Figure 5

**600**

Standardizing unit Usd

Training unit 60 — 63 — 65

Predicting subunit          Adjusting subunit

Encoding subunit 61 — 617 — 615

Generating unit          Embedding unit

— 611 — 613

Identification sequence
generating unit          Hiding unit

**Figure 6**

**700** — 701

Memory

— 703

Processor

**Figure 7**

800

CPU — 801    ROM — 802    RAM — 803

— 804

Input/output interface — 805

| Input part — 806 | Output part — 807 | Storage part — 808 | Communication part — 809 | Driver — 810 |

Removable medium — 811

**Figure 8**

Europäisches
Patentamt

European
Patent Office

Office européen
des brevets

**EUROPEAN SEARCH REPORT**

**Application Number**

**EP 22 20 7726**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lee Jinhyuk ET AL: "Data and text mining BioBERT: a pre-trained biomedical language representation model for biomedical text mining", , 1 January 2019 (2019-01-01), XP093033575, Retrieved from the Internet: URL:https://arxiv.org/ftp/arxiv/papers/1901/1901.08746.pdf [retrieved on 2023-03-21] * section 1, 2, 3 * | 1-10 | INV. G06F40/237 G06F40/242 G06F40/279 G06F40/30 G06N3/00 |
| | ----- | | |
| X | FANG LU ET AL: "Biomedical Entity Normalization based on Pre-trained Model with Enhanced Information", , 14 October 2021 (2021-10-14), XP093033524, Retrieved from the Internet: URL:https://ceur-ws.org/Vol-2980/paper334.pdf> * section 1, 2.2 and 3 * | 1-10 | |
| | ----- | | TECHNICAL FIELDS SEARCHED (IPC) |
| A | ZHU WENWU ET AL: "Enriching Pre-trained Language Model with Entity Information for Relation Classification", PROCEEDINGS OF THE 28TH ACM INTERNATIONAL CONFERENCE ON INFORMATION AND KNOWLEDGE MANAGEMENT, 3 November 2019 (2019-11-03), pages 2361-2364, XP093033529, New York, NY, USA DOI: 10.1145/3357384.3358119 Retrieved from the Internet: URL:https://arxiv.org/pdf/1905.08284.pdf> * section3 * | 1-10 | G06F G06N |
| | ----- | | |
| | -/-- | | |

The present search report has been drawn up for all claims

| Place of search | Date of completion of the search | Examiner |
|---|---|---|
| Berlin | 21 March 2023 | Alt, Susanne |

EPO FORM 1503 03.82 (P04C01)

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

page 1 of 2

Europäisches Patentamt

European Patent Office

Office européen des brevets

# EUROPEAN SEARCH REPORT

Application Number

**EP 22 20 7726**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Wu Yonghui ET AL: "Google's neural machine translation system: bridging the gap between human and machine translation", , 26 September 2016 (2016-09-26), XP093033614, DOI: 10.48550/arXiv.1609.08144 Retrieved from the Internet: URL:https://arxiv.org/pdf/1609.08144.pdf [retrieved on 2023-03-21] * section 4 * | 1-10 | |

TECHNICAL FIELDS SEARCHED (IPC)

The present search report has been drawn up for all claims

| Place of search | Date of completion of the search | Examiner |
|---|---|---|
| Berlin | 21 March 2023 | Alt, Susanne |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111470762